# EUROPEAN PATENT APPLICATION

(11) **EP 4 717 399 A1**
(43) Date of publication of application: **01.04.2026**
(21) Application number: 24913413.1
(22) Date of filing: 26.12.2024
(51) Int. Cl.: B23K 37/04, B23K 26/21, H01M 50/531, H01M 50/264, B23K 101/36

(54) **LASER WELDING JIG, LASER WELDING SYSTEM, AND WELDING METHOD USING SAME**

(30) Priority: 26.12.2023 KR 20230191605; 26.01.2024 KR 20240012612; 23.04.2024 KR 20240054168
(71) Applicant: LG Energy Solution, Ltd., Seoul 07335 (KR)
(72) Inventor: LEE, Jaechul, Daejeon 34122 (KR); LEE, Jungwoo, Daejeon 34122 (KR); KIM, Heesung, Daejeon 34122 (KR); SEUNG, Kyung Bae, Daejeon 34122 (KR)
(74) Representative: Plasseraud IP
(86) International application number: PCT/KR2024/021161
(87) International publication number: WO 2025/143806

(57) **Abstract**

A laser welding jig according to the present invention is applied to a battery cell assembly including a plurality of stacked battery cells and a side frame covering at least a portion of the plurality of battery cells, in which two adjacent leads are bent and welded, and the laser welding jig comprises: a pallet configured to allow the battery cell assembly to be seated thereon; and a protective jig arranged between the two adjacent leads.

## Description

### Technical Field

The present disclosure relates to a laser welding jig, a laser welding system and a welding method using the same.

### Background Art

Secondary batteries can be charged and discharged, so they are widely used in mobile devices such as digital cameras, cell phones, and laptops, and have been attracting attention as an energy source, especially in recent years, for electric vehicles and energy storage systems (ESS). Meanwhile, as large capacity and high output power are required in electric vehicles and the ESS, medium-to large-sized battery devices, such as battery modules that house multiple secondary batteries inside a housing or battery packs that have multiple battery modules, are widely used.

It is desirable for medium-to-large-sized battery devices to be manufactured with as small a size and weight as possible, and thus square battery cells and pouch-type battery cells, which can be stacked with high integration and have small weight per capacity, are mainly used as battery cells (unit cells). Specifically, since pouch-type battery cells that use aluminum laminate sheets, etc. as external materials have the advantages of being light in weight, low in manufacturing cost and easy to change shape, the pouch-type battery cells have recently attracted a lot of attention.

Meanwhile, these medium-to-large-sized battery devices can be formed by assembling multiple battery cells, and in this case, multiple battery cells must be electrically connected.

In the existing technology, leads of adjacent battery cells are welded onto a busbar, but the busbar made of metal has disadvantages in terms of weight and cost of the battery pack.

Therefore, there is a need to develop a laser welding jig configured to omit the busbar and a laser welding method using the same.

### Detailed Description of the Invention

### Technical Goals

The present disclosure is conceived taking into account of the problems described above, and intended to provide a laser welding jig configured to omit a busbar in a laser welding process for electrical connection of battery cell leads.

### Technical solutions

According to an example embodiment of the present disclosure, provided is a laser welding jig applied to a battery cell assembly that includes stacked plurality of battery cells and a side frame covering at least some of the plurality of battery cells, and in which adjacent two leads are bent and welded, the laser welding jig includes a pallet configured on which the battery cell assembly is mounted and a protective jig disposed between the two adjacent two leads.

The protective jig may be positioned back of the two adjacent leads.

The protective jig may include carbon steel.

The protective jig may include one end that is connected to the pallet to form a fixed end, and the other end that forms a free end.

The pallet may include a plate part to which the battery cell assembly is mounted, a pressing part configured to press the battery cell assembly mounted on the plate part, and a connecting part that extends from the plate part and to which the protective jig is connected.

The connecting part may be configured to be spaced apart from or accessible to one surface of the battery cell assembly in which the side frame is provided in a vertical direction.

The laser welding jig may further include an insulating block connecting the connecting part and the protective jig.

The insulating block may include a slidingly joining part that is configured in order for the protective jig to move in a direction parallel to a stacking direction of the plurality of battery cells.

The plate part may further include a fixing part configured to fix the side frame of the battery cell assembly.

According to an example embodiment of the present disclosure, provided is a laser welding system further including a laser welding jig and a moving part configured to move the battery cell assembly.

The pallet may include a moving part receiving part in which at least some of the battery cell assembly is not mounted in order for the moving part to be received.

According to an example embodiment of the present disclosure, provided is a laser welding method of joining leads of a plurality of battery cells using the laser welding jig, the laser welding method including mounting a battery cell assembly to the laser welding jig, bending the leads of the plurality of battery cells, and welding the bent leads.

The mounting the battery cell assembly to the laser welding jig may include the battery cell assembly being mounted by a moving part configured to move the battery cell assembly.

The mounting the battery cell assembly to the laser welding jig may include the battery cell assembly being fixed by a fixing part provided by the laser welding jig.

The side frame may include a protective jig storage part that receives the protective jig, a first supporting part that is provided at one side of the protective jig storage part and configured to support a lead of the battery cell, and a second supporting part that is provided at the other side of the protective jig storage part and configured to support a lead of the battery cell.

The bending the leads of the plurality of battery cells may include the bent leads that are bent in order to include a first area supported by the first supporting part and a second area supported by the second supporting part.

The pallet of the laser welding jig may include a plate part to which the battery cell assembly is mounted, a pressing part configured to press the battery cell assembly mounted to the plate part and a connecting part that extends from the plate part and to which the protective jig is connected, and the connecting part may be configured to be spaced apart from or accessible to one surface of the battery cell assembly in which the side frame is provided in a vertical direction.

The welding method may further include, before mounting the battery cell assembly to the laser welding jig, moving the connecting part to be spaced apart from one surface of the battery cell assembly in which the side frame is provided in the vertical direction.

The welding method may further include, after mounting the battery cell assembly to the laser welding jig, moving the connecting part to be accessible to one surface of the battery cell assembly in which the side frame is provided in the vertical direction.

The welding method may further include, after welding the bent leads, de-mounting the battery cell assembly by a moving part configured to move the battery cell assembly.

### Effects of the Invention

According to an aspect of the present disclosure, a battery cell assembly can be protected from welding plasma generated at the rear of the area where laser welding of the bent leads are performed. This is because a protective jig is positioned at the rear of the area where laser welding is performed to prevent the welding plasma from damaging the side frame or battery cells. This makes it possible to configure a battery pack without a busbar, thereby reducing the weight and cost of the battery pack.

According to another aspect of the present disclosure, it is possible to ensure insulation between adjacent protective jigs. Therefore, the welding process may be performed smoothly in any electrical connection relationship of a plurality of battery cells, including series, parallel, and all of these. It is possible to prevent problems such as short circuits occurring when battery cells that should not be electrically connected are connected and failure to satisfy the desired electrical connection relationship according to the electrical connection relationship of a plurality of battery cells. Further, the protective jig receiving part is provided so that the protective jig can be stably accommodated in the insulating block.

According to another aspect of the present disclosure, the battery cell assembly may be stably fixed to the laser welding jig. Further, it may be easy to align the protective jig between the leads of adjacent battery cells.

According to another aspect of the present disclosure, by mounting the battery cell assembly to the plate part in a state that the connection part is moved outwardly, the battery cell assembly can be prevented from being damaged by the protective jig.

According to another aspect of the present disclosure, since the protective jig is moved while the battery cell assembly is pressurized by the pressing part, it may be easy to align the protective jig to the proper position on the battery cell assembly.

### Brief Description of Drawings

FIG. 1 is a drawing illustrating a laser welding jig according to an example embodiment of the present disclosure.
FIG. 2 is a drawing illustrating a laser welding jig and a battery cell assembly according to an example embodiment of the present disclosure.
FIG. 3 is a drawing illustrating a protective jig included in a laser welding jig according to an example embodiment of the present disclosure.
FIG. 4 is a cross-sectional drawing of a laser welding jig and a battery cell assembly according to an example embodiment of the present disclosure.
FIG. 5 is a partially enlarged view of a laser welding jig according to another example embodiment of the present disclosure.
FIG. 6 is a partially enlarged view of a laser welding jig according to another example embodiment of the present disclosure.
FIG. 7 is a cross-sectional drawing of a laser welding jig and a battery cell assembly according to an example embodiment of the present disclosure.
FIG. 8 is a drawing illustrating the appearance of a battery cell assembly before it is mounted on a laser welding jig according to another embodiment of the present disclosure.
FIG. 9 is a drawing illustrating the appearance of a battery cell assembly after it is mounted on a laser welding jig according to another example embodiment of the present disclosure.
FIG. 10 is a drawing illustrating the bending of a lead of a battery cell assembly mounted on a laser welding jig according to an example embodiment of the present disclosure.
FIG. 11 is a drawing illustrating a battery cell assembly being de-mounted from a laser welding jig according to another example embodiment of the present disclosure.
FIG. 12 is a drawing illustrating a lead of a battery cell assembly being laser welded, the battery cell assembly mounted on a laser welding jig, according to an example embodiment of the present disclosure.
FIG. 13 is a drawing illustrating a bent lead of a battery cell assembly mounted on a laser welding jig according to another example embodiment of the present disclosure.
FIG. 14 is a drawing illustrating a laser welding jig according to another example embodiment of the present disclosure.
FIG. 15 is a drawing illustrating the appearance of a battery cell assembly before it is mounted on a laser welding jig according to another example embodiment of the present disclosure.
FIG. 16 is a drawing illustrating the appearance of a battery cell assembly after it is mounted on a laser welding jig according to another example embodiment of the present disclosure.

### Mode for Carrying Out the Invention

Prior to the detailed description of the present disclosure, terms or words used in the specification and claims should not be construed as limited to their common or dictionary meanings. Further, the terms or words should be interpreted with meaning and concept consistent with the technical idea of the present disclosure based on the principle that the inventor may appropriately define the concept of terms in order to explain his or her invention in the best way. The example embodiments described in this specification and the configurations shown in the drawings are only the most preferred embodiments of the present disclosure, and do not necessarily represent the entire technical idea of the present disclosure. Accordingly, at the time of filing the present disclosure, there may be various equivalents and modifications that can replace them.

The same reference numeral or sign shown in each drawing attached to the specification may represent parts or components that perform substantially the same function. For convenience of description and understanding, different embodiments may be described using the same reference numerals or symbols. In other words, even if a component or an element having the same reference numeral is shown in multiple drawings, the multiple drawings may not all represent one example embodiment.

In the following description, singular expressions include plural expressions unless the context clearly dictates otherwise. It will be understood that, when an element (for example, a first element) is "(operatively or communicatively) coupled with/to" or "connected to" another element (for example, a second element), the element may be directly coupled with/to another element, and there may be an intervening element (for example, a third element) between the element and another element. The terms "have," "may have," "include," and "may include" as used herein indicate the presence of corresponding features (for example, elements such as numerical values, functions, operations, or parts), and do not preclude the presence of additional features.

Further, in the following description, expressions such as an upper side, top, a lower side, bottom, a side, front and a back side are expressed based on the direction shown in the drawing. If the direction of the object changes, it may be expressed differently.

Further, in the specification and claims, terms including ordinal numbers such as "first," "second," etc. may be used to distinguish between components or elements. These ordinal numbers are used to distinguish identical or similar components from each other, and the meaning of the terms should not be interpreted limitedly due to the use of such ordinal numbers. For example, components or elements combined with these ordinal numbers should not be interpreted as having a limited order of use or arrangement based on the number. If necessary, each ordinal number may be used interchangeably.

Hereinafter, example embodiments of the present disclosure will be described in detail with reference to the attached drawings. However, the spirit of the present disclosure may not be limited to the example embodiments. For example, a person skilled in the art who understands the spirit of the present disclosure may suggest other example embodiments that are included within the scope of the spirit of the present disclosure through addition, change, or deletion of components or elements: however, such example embodiments are intended to be included within the scope of the present disclosure. The shapes and sizes of elements in the drawings may be exaggerated for clearer explanation.

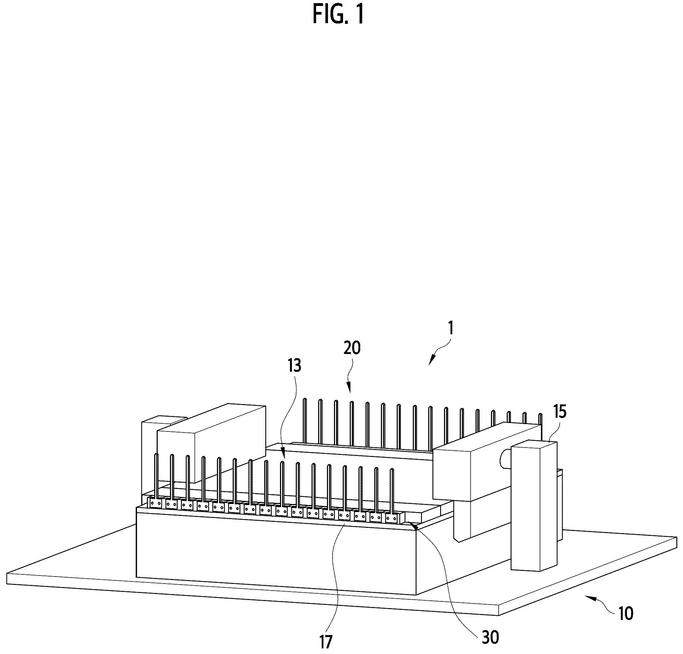

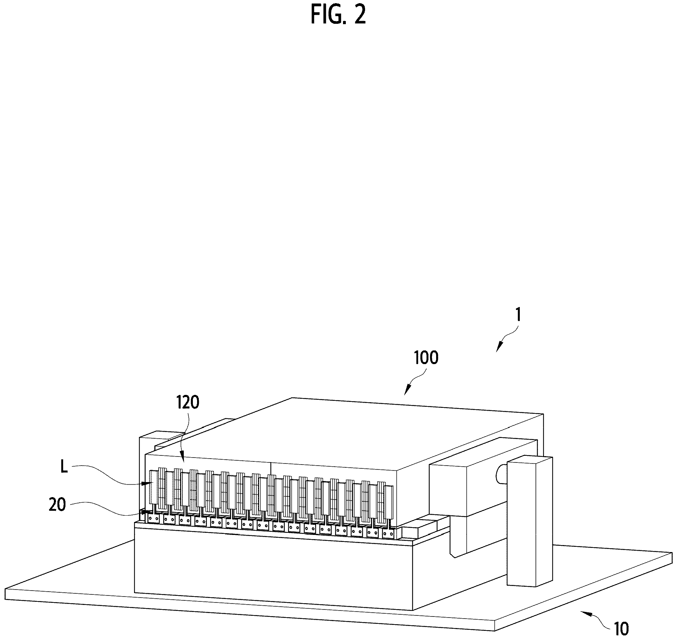

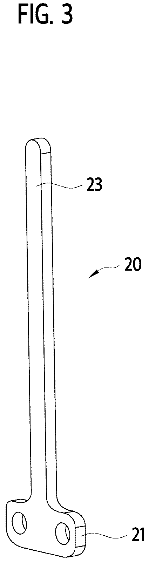

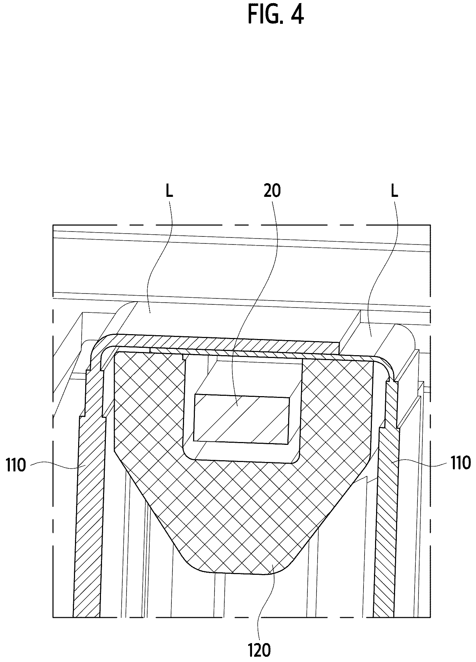

FIG. 1 is a drawing illustrating a laser welding jig 1 according to an example embodiment of the present disclosure. FIG. 2 is a drawing illustrating the laser welding jig 1 and a battery cell assembly 100 according to an example embodiment of the present disclosure. FIG. 3 is a drawing illustrating a protective jig 20 included in the laser welding jig 1 according to an example embodiment of the present disclosure. FIG. 4 is a cross-sectional drawing of the laser welding jig 1 and the battery cell assembly 100 according to an example embodiment of the present disclosure.

Referring to FIG. 1 to FIG. 4, the laser welding jig 1 according to the present disclosure may include a pallet 10 and the protective jig 20.

Before describing the laser welding jig 1, the battery cell assembly 100 mounted on the laser welding jig 1 is described.

The battery cell assembly 100 may include a plurality of battery cells 110 and a side frame 120. The battery cell assembly 100 may be formed by stacking the plurality of battery cells 110 in one direction. The battery cell assembly 100 may not include a busbar.

The battery cell 110 may be a pouch cell. The battery cell 110 may include an electrode assembly, an electrolyte, and a pouch outer case. The electrode assembly may be formed by folding or winding a laminate including a first electrode, a second electrode and a separator. The battery cell 110 may include a first lead protruding outside the pouch outer body and electrically connected to a first electrode of the electrode assembly and a second lead electrically connected to the second electrode of the electrode assembly and protruding outside the pouch outer shell. The first lead and the second lead may protrude in both directions as illustrated in FIG. 2, but may protrude in one direction. The first lead may be made of copper. The first lead may be negative. The second lead may be made of aluminum. The second lead may be positive.

The side frame 120 may cover at least some of the plurality of battery cells 110. The side frame 120 may include a plurality of structures (a supporting part and a protective jig storage part to be described later) corresponding to the number of leads L of the battery cell 110. For example, each structure of the side frame 120 may be provided corresponding to two adjacent leads L.

Two adjacent leads L may be bent so as to overlap each other. At this time, the side frame 120 may be configured with supporting parts on both sides to support the bent leads L by coming into contact with the bent leads L. Depending on the support structure of the supporting part, the leads L may be bent consistently, and occurrence of gaps between the folded leads L may be minimized.

A protective jig storage part for accommodating the protective jig 20 may be provided between the two projections of the side frame 120, and at least one side of the protective jig storage part may be opened for insertion of the protective jig 20. The lead L of the battery cell 110 may penetrate the accommodation space of the side frame 120 in its length direction.

When the first and second leads of the battery cell 110 protrude in different directions (for example, a bidirectional cell), a plurality of side frames 120 may be provided to cover different sides of the plurality of battery cells 110. However, unlike what is illustrated in FIG. 2, when the first and second leads of the battery cell 110 protrude in one direction (for example, a unidirectional cell), the side frame may only cover 100% of one side of the battery cell assembly.

The side frame 120 may include electrically insulating material.

The pallet 10 may be configured to mount the battery cell assemblies 100 thereon. The pallet 10 may be configured to support the battery cell assemblies 100 in a direction perpendicular to the direction in which the plurality of battery cells 110 are stacked.

The protective jig 20 may be provided between the leads L of adjacent battery cells among the plurality of battery cells 110. The protective jig 20 may be connected to the pallet 10. The protective jig 20 may be positioned at the rear (in other words, the direction toward the inside of the battery cell assembly 100) of the lead L of the bent battery cell.

According to the configuration of the present disclosure, the battery cell assembly 100 may be protected from the welding plasma generated at the rear of the area where laser welding of the bent leads L are performed. Because it can prevent the welding plasma from damaging the side frame 120 or the battery cell 110 by the protective jig 20 being positioned at the rear of the area where laser welding of the bent leads L are performed. Specifically, even if the battery pack does not include a busbar, by installing the protective jig 20 on the laser welding jig 1, the battery cell assembly 100 may be prevented from being damaged during the welding process of the bent leads L. Therefore, the electrical connection of the plurality of battery cells 110 without a busbar in the battery pack is possible, and this would lead to weight and cost reductions in battery packs.

Referring back to FIG. 1, the pallet 10 may include a plate part 13, a pressing part 15 and a connecting part 17.

The plate part 13 provides an area on which the battery cell assembly 100 is mounted. The plate part 13 may support the battery cell assembly 100 in a direction perpendicular to the direction in which the plurality of battery cells 110 are stacked.

The pressing part 15 may pressurize the battery cell assembly 100 mounted on the plate part 13. The pressing part 15 may pressurize the battery cell assembly 100 from the side in a direction parallel to the direction in which the plurality of battery cells 110 are stacked. In particular, the pressing part 15 may pressurize the battery cell assembly 100 by pressing both sides of the battery cell assembly 100.

The pressurization method of the pressing part 15 may be manual through operator operation, or the pressurization method may be automatically operated by an electric signal connected to an actuator.

The connection part 17 may have one end extended from the plate part 13 and the protective jig 20 may be connected to the other end. The connecting part 17 may be connected to the bottom of the protective jig 20.

Referring again to FIG. 1 to FIG. 4, the protective jig 20 may have a cantilever beam form. One end of the protective jig 20 may be connected to the pallet 10 to form a fixed end 21. The other end of the protective jig 20 may form a free end 23. The bottom of the protective jig 20 may be bolted to the pallet 10. Since the protective jig 20 is erected in a direction perpendicular to the ground, sagging due to self-weight may be prevented. The protective jig 20 is damaged during the laser welding process, and thus after a certain number of laser processes, replacement is essential. Therefore, with the configuration, the protective jig 20 does not sag under its own weight and thus the replacement process of the protective jig 20 is easy, and the replacement cycle may be extended. Further, since the protective jig 20 is individually installed between the leads L of adjacent battery cells among the plurality of battery cells 110, each protective jig 20 may be replaced individually.

The protective jig 20 is roughly in the shape of a stick and may penetrate the space between the two leads L of two neighboring battery cells. By the free end of the protective jig 20 being provided to protrude further than one edge of the two bent leads L, the possibility of damage to the battery cell 110 by welding may be minimized.

The width of the protective jig 20 may vary depending on a point. For example, the fixed end of the protective jig 20 may be formed with a wider width than the other parts to ensure smooth connection with the pallet 10 and the area in contact with the pallet 10 may be increased and rigidity may be secured.

The other end of the protective jig 20 may be chamfered. In the process of mounting and removing the battery cell assembly 100 from the laser welding jig 1, even if the protective jig 20 comes into contact with the battery cell assembly 100, the resulting damage may be minimized.

The protective jig 20 may contain carbon steel, for example, S45C material. The protective jig 20 may additionally include an insulating coating layer on the outside to prevent short circuiting of the battery cell 110.

Referring again to FIG. 4, the protective jig 20 may be positioned so as not to touch the bent leads L. The clearance between the protective jig 20 and the bent leads L may be approximately twice the sum of the thicknesses of the bent and overlapped lead L, or greater. This may prevent the lead L and the protective jig 20 from being fused during the laser welding process.

The protective jig 20 may be at least 2.5 times the sum of the thicknesses of the bent and overlapped leads L. Through this, the protective jig 20 may be prevented from being thermally deformed by the welding plasma.

The protective jig 20 may be positioned in order not to touch the side frame 120. The clearance between the protective jig 20 and the side frame 120 may be greater than the sum of the thicknesses of the bent and overlapped leads L. Through this, even if the heat caused by the welding plasma is conducted toward the side frame 120 through the protective jig 20, the side frame 120 is prevented from being thermally deformed. Further, during the process of mounting and removing the battery cell assembly 100 from the laser welding jig 1, the protective jig 20 may be prevented from touching the battery cell assembly 100.

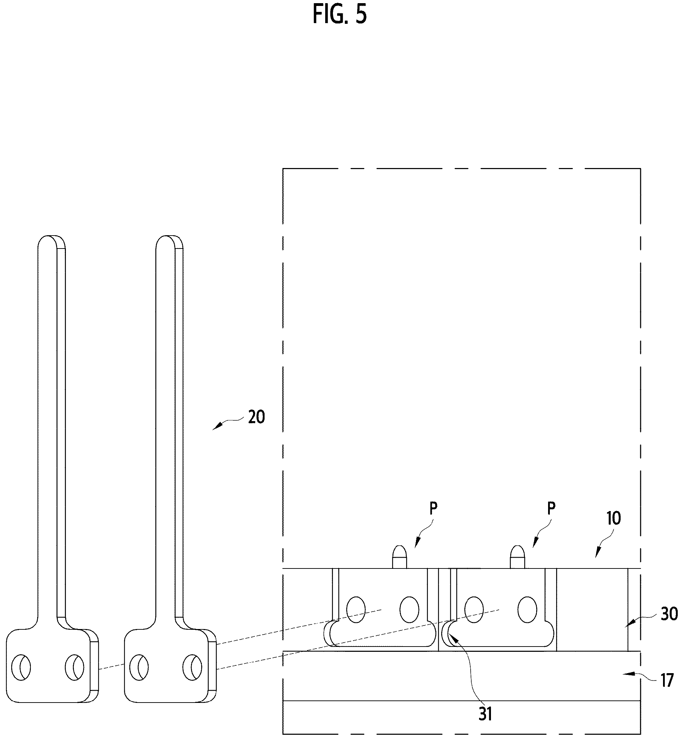

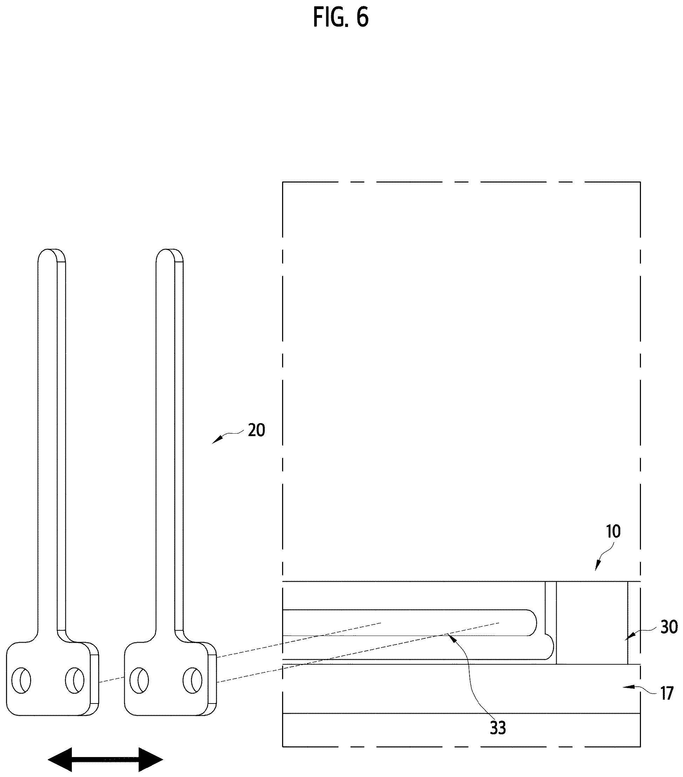

FIG. 5 is a partially enlarged view of the laser welding jig 1 according to another example embodiment of the present disclosure. FIG. 6 is a partially enlarged view of the laser welding jig 1 according to another example embodiment of the present disclosure.

Referring to FIG. 5 and FIG. 6, the laser welding jig 1 may further include an insulating block 30.

The insulating block 30 may connect the connecting part 17 and the protective jig 20. A plurality of insulating blocks 30 may be arranged together with the protective jig 20 along the stacking direction of the battery cell assembly 100. The insulating blocks 30 may be placed corresponding to the lower portion of the lead L of the battery cell.

The insulating block 30 may be equipped with a protective jig receiving part 31. The protective jig receiving part 31 may be configured to accommodate the protective jig 20. The protective jig receiving part 31 may be a groove formed on one surface of the protective jig 20 so as to be approximately equal to or greater than the thickness, width and length of the fixed end 21 of the protective jig 20, to receive the fixed end 21 of the protective jig 20.

The insulating block 30 may be provided with a slidingly joining part 33 configured to allow the protective jig 20 to move in a direction parallel to the stacking direction of the plurality of battery cells 110. The slidingly joining part 33 may be formed on the outer surface of the insulating block 30, and may be the groove extending along the stacking direction of a plurality of battery cells so that a bolt connected to the protective jig 20 may be inserted and moved.

The connection part between the protective jig 20 and the insulating block 30 on the insulating block 30 may be variable. Referring to FIG. 6, after moving the protective jig 20 on the insulating block 30 to the desired position, and after inserting the bolt into the slidingly joining part 33, the nut may be tightened to secure the protective jig 20. However, a movable structure of the insulating block 30 is not limited to this, and for example, a rail may be provided on the insulating block 30, and the protective jig 20 may move on the rail, and the spacing of the protective jig 20 may be adjusted. According to the configuration, it is possible to adjust the spacing of the protective jig 20. The size of the battery cell 110 included in the battery cell assembly 100 varies depending on size, voltage and so on, and thus the spacing between the battery cells 110 may vary. In this case, a laser welding jig must be manufactured for each different battery cell assembly, but according to the present disclosure, by variably adjusting the spacing of the protective jig 20, one laser welding jig may be used for different battery cell assemblies 100.

According to the configuration of the present disclosure, the insulation may be satisfied between adjacent protective jigs 20. Therefore, the welding process is performed smoothly in any electrical connection relationship of the plurality of battery cells 110, including series, parallel and all of these. Prevented may be the problem in which battery cells that should not be electrically connected are connected according to the electrical connection relationship of the plurality of battery cells 110, causing a short circuit or failing to satisfy the desired electrical connection relationship. Further, the protective jig receiving part 31 is provided so that the protective jig 20 may be stably accommodated in the insulating block 30.

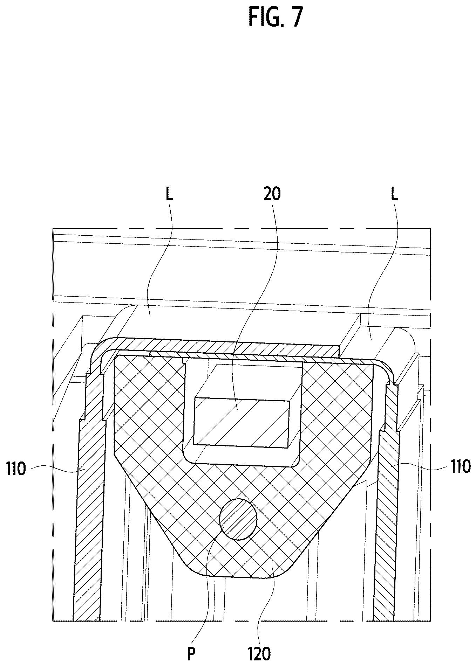

FIG. 7 is a cross-sectional drawing of a laser welding jig and a battery cell assembly according to an example embodiment of the present disclosure.

Referring to FIG. 5 and FIG. 7, the laser welding jig 1 may further include a fixing part P.

The fixing part P may be configured to fix the side frame 120 of the battery cell assembly 100. The fixing part P may be in the form of a pin. The fixing part P may be fitted into the hole formed at the bottom of the side frame 120. Through this, the battery cell assembly 100 may be stably fixed to the laser welding jig 1. Further, the protective jig 20 may be easily aligned between the leads L of adjacent battery cells.

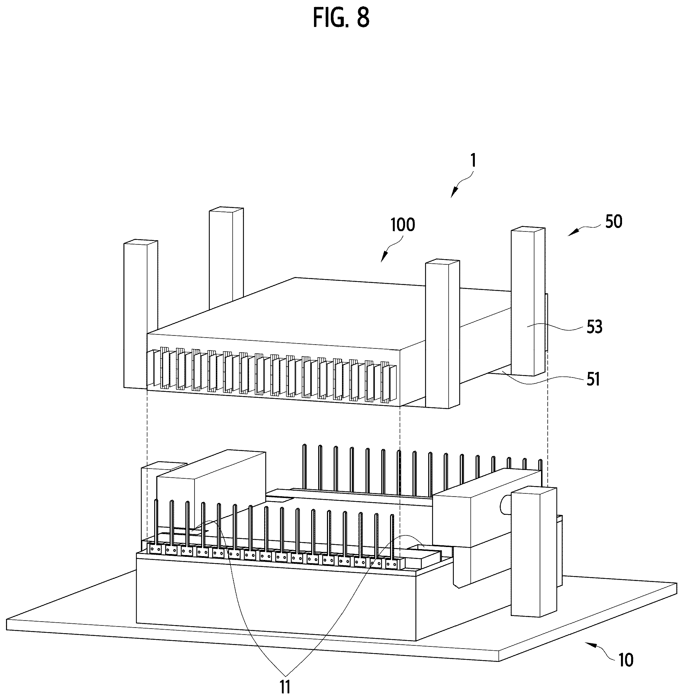

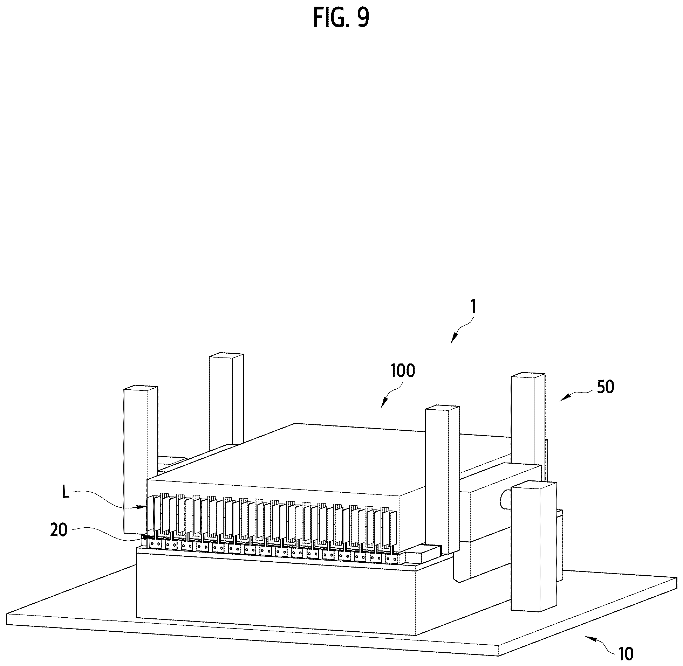

FIG. 8 is a drawing illustrating the appearance of the battery cell assembly 100 before it is mounted on the laser welding jig 1 according to an example embodiment of the present disclosure. FIG. 9 is a drawing illustrating the appearance of the battery cell assembly 100 after it is mounted on the laser welding jig 1 according to an example embodiment of the present disclosure.

Referring to FIG. 8 and FIG. 9, the laser welding system according to the present disclosure may further include a moving part 50.

The moving part 50 may be configured to move the battery cell assembly 100. The moving part 50 may move the battery cell assembly 100 while containing the battery cell assembly 100. The moving part 50 may include a first part 51 that supports the battery cell assembly 100 at the bottom of the battery cell assembly 100 and a second part 53 extending from the first part 51 and covering the sides of the battery cell assembly 100. The moving part 50 may be a robot arm including the first part 51 and the second part 53. Including four robot arms, the moving part 50 may move the battery cell assembly 100 while holding the battery cell assembly 100 with two robot arms on each side of the battery cell assembly 100. The moving part 50 may include a driving part that generates power to move the robot arms. However, the moving part 50 may be moved manually by the operator, and in this case, the driving part may not be provided.

The pallet 10 may be equipped with a moving part receiving part 11 in which at least some of the battery cell assembly 100 is not mounted in order for the moving part 50 to be received. The moving part receiving part 11 may be a part configured to open the battery cell assembly 100 toward the ground. The pallet 10 may be configured to have the moving part receiving part 11 in order that there is no interference with the moving part 50 as the moving part 50 moves.

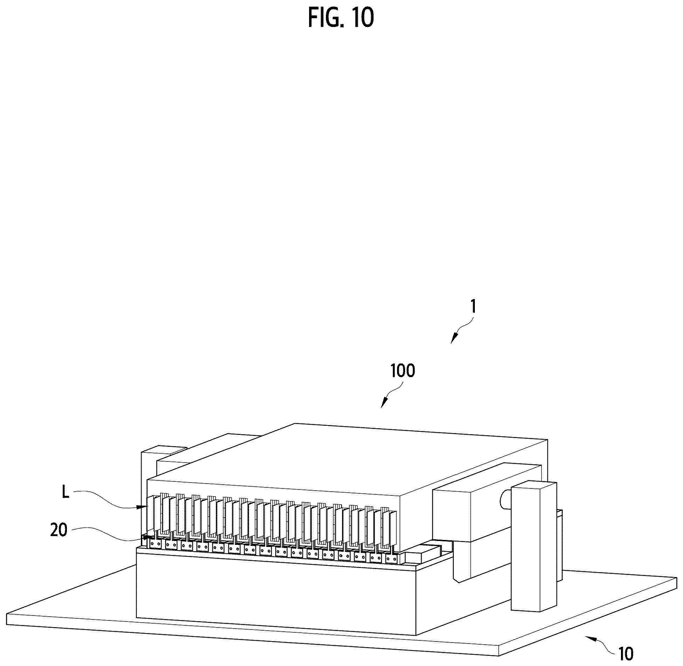

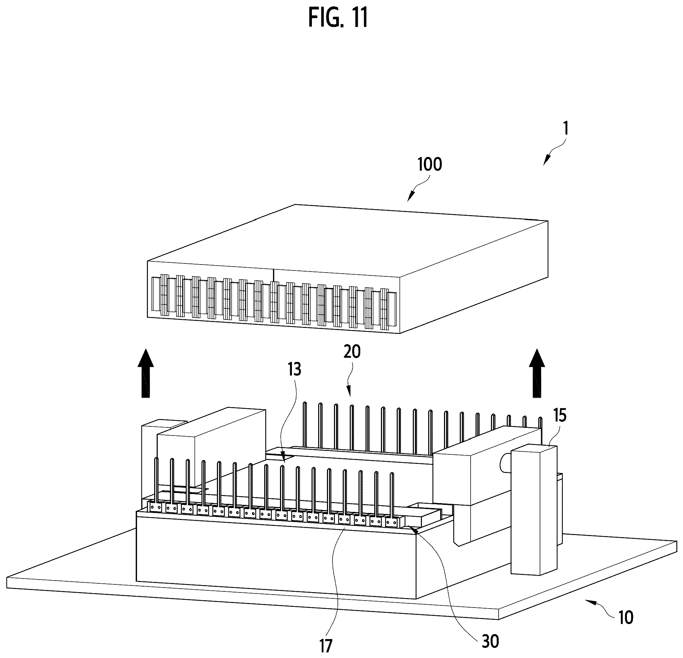

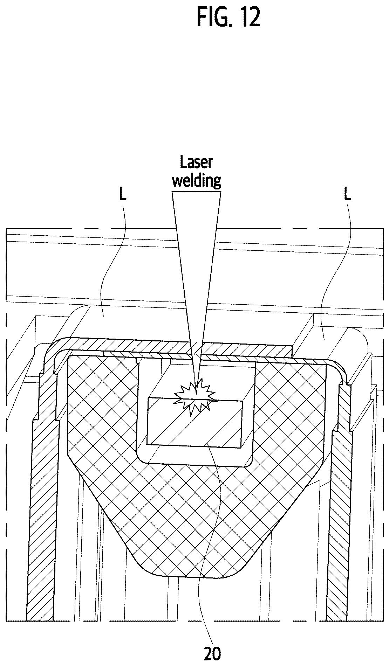

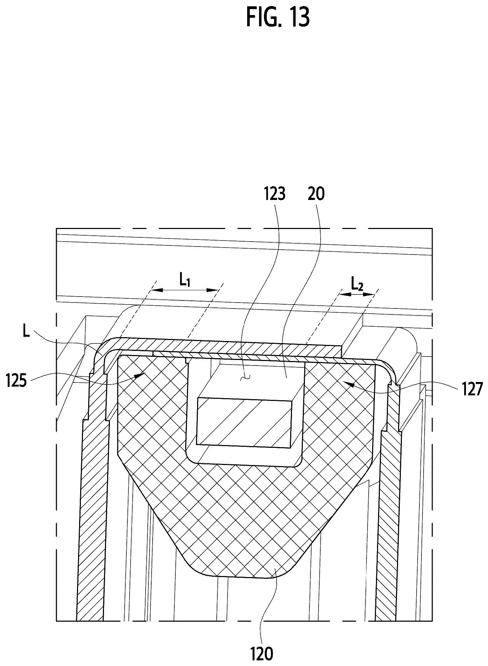

FIG. 10 is a drawing illustrating the bending of the lead L of the battery cell assembly 100 mounted on the laser welding jig 1 according to an example embodiment of the present disclosure. FIG. 11 is a drawing illustrating the battery cell assembly 100 being de-mounted from the laser welding jig 1 according to another example embodiment of the present disclosure. FIG. 12 is a drawing illustrating the lead L of the battery cell assembly 100 being laser welded, the battery cell assembly mounted on the laser welding jig 1, according to an example embodiment of the present disclosure. FIG. 13 is a drawing illustrating the bent leads L of the battery cell assembly 100 mounted on the laser welding jig 1 according to another example embodiment of the present disclosure.

Referring back to FIG. 8 to FIG. 13, the laser welding method according to the present disclosure may include an operation of mounting the battery cell assembly 100 on the laser welding jig 1, an operation of bending the leads L of a plurality of battery cells and an operation of welding the bent leads L.

The battery cell assembly 100 may be mounted on the laser welding jig 1 from the top toward the bottom of the laser welding jig 1.

In the operation of mounting the battery cell assembly 100 on the laser welding jig 1, the mounting is accomplished by the moving part 50 configured to move the battery cell assembly 100.

In the operation of mounting the battery cell assembly 100 on the laser welding jig 1, the battery cell assembly 100 may be fixed by the fixing part P provided on the laser welding jig 1. The pin-shaped fixing part P formed on the plate part 13 may be inserted and fixed into a hole formed at the bottom of the side frame 120 of the battery cell assembly 100. In this process, the battery cell assembly 100 may be pressurized or positioned so that the protective jig 20 is positioned between the leads L of adjacent battery cells.

After the operation of welding the bent leads L, the laser welding method according to the present disclosure may further include an operation of releasing the mounted state by the moving part 50 configured to move the battery cell assembly 100.

The side frame 120 may include a protective jig storage part 123, a first supporting part 125 and a second supporting part 127.

The protective jig storage part 123 may accommodate the protective jigs 20. The first supporting part 125 may be provided on one side of the protective jig storage part 123 and may support the lead L of the battery cell. The second supporting part 127 may be provided on the other side of the protective jig storage part 123 and may support the lead L of the battery cell.

The leads L of a plurality of battery cells may be bent toward the side frame 120 depending on the electrical connection required in the battery pack. The bent leads L may be pressurized to a certain pressure while supported by the first supporting part 125 and the second supporting part 127. In the operation of bending the leads L of a plurality of battery cells, the bent leads L may be bent to include a first area L₁ supported by the first supporting part 125 and a second area L₂ supported by the second supporting part 127. The bent leads L may be stably supported by two supporting parts.

The leads L, which are bent and overlapped with each other, may be joined by the laser welding while being pressed toward the side frame 120. The protective jig 20 may be positioned at the rear of the area where the laser welding of the bent leads L are performed. An area where the laser welding of the bent leads L are performed may be between the first supporting part 125 and the second supporting part 127.

The laser welding may be done with the output that is less than the output that makes the hole in the lead L, or higher than the output that causes a weak weld lower than the desired weld strength between the bent leads L.

When the laser welding is finished, the battery cell assembly 100 may be separated from the laser welding jig 1 by moving from the bottom to the top of the laser welding jig 1.

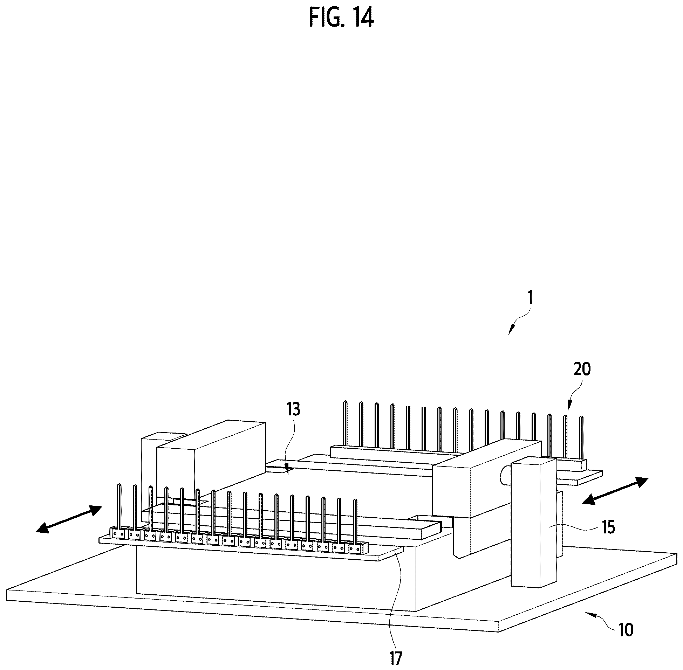

FIG. 14 is a drawing illustrating the laser welding jig 1 according to another example embodiment of the present disclosure.

Referring to FIG. 14, the connecting part 17 may be configured to move in a direction extending from the plate part 13 or the laser welding jig 1 and in the opposite direction. In other words, the protective jig 20 connected to the connecting part 17 may be configured to be vertically spaced from or accessible to one surface of the battery cell assembly 100 having the side frame 120.

The connecting part 17 may slide along a rail or groove formed in the plate part 13. The connecting part 17 is connected to the cylinder and may move by the operation of the cylinder.

According to the configuration of the present disclosure, in the state the connecting part 17 to which the protective jig 20 is connected is moved and extended, by mounting the battery cell assembly 100 to the plate part 13 and by mounting the protective jig 20 to the side of the battery cell assembly 100, the possibility of interference between the protective jig 20 and the battery cell assembly 100 may be minimized, specifically, between the protective jig 20 and the lead L.

A pad for swelling absorption and so on may be provided between the plurality of battery cells 110 constituting the battery cell assembly 100. The pad may expand and pad volume may increase if not pressurized. If the battery cell assembly 100 is not pressurized, as the pad expands, the location where the protective jig should be installed may change. Therefore, there is advantage that when implementing a movable mechanism in which the protective jig 20 is inserted laterally into the battery cell assembly 100, even if the battery cell assembly 100 is mounted on the plate part 13 and pressurized with the pressing part 15, no interference problem occurs between the protective jig 20 and the battery cell assembly 100.

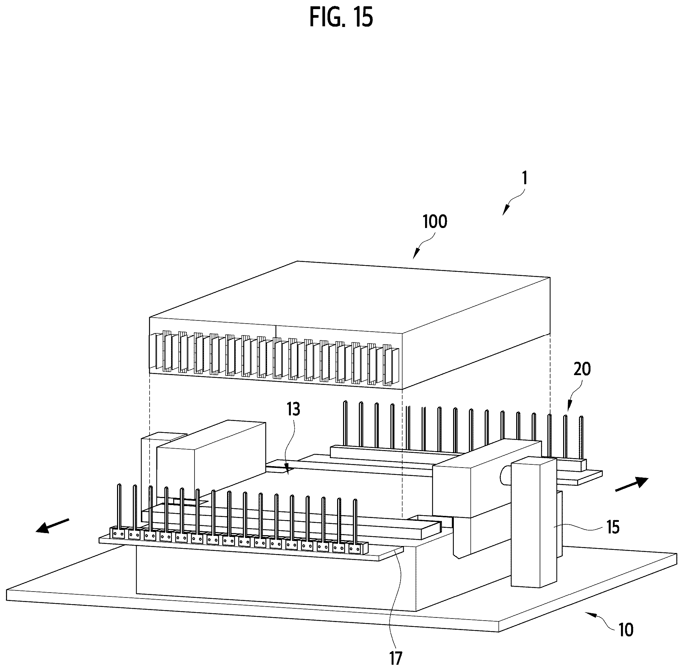

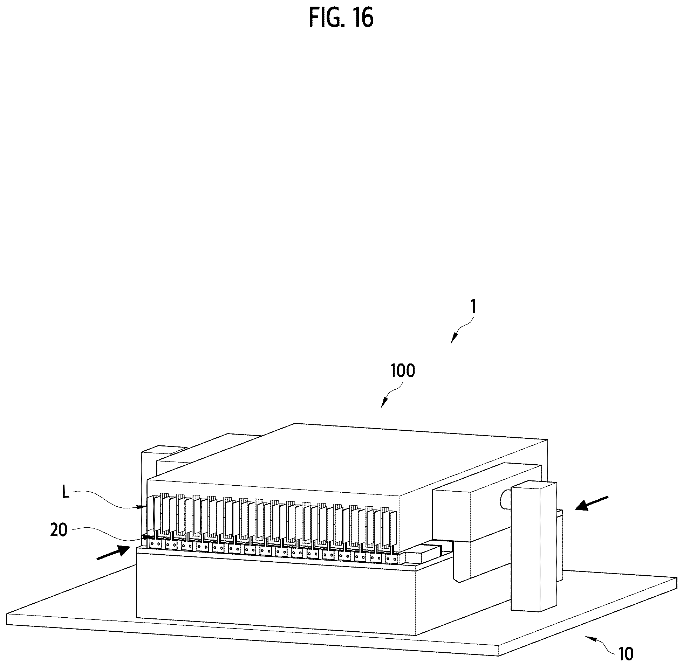

FIG. 15 is a drawing illustrating the appearance of the battery cell assembly 100 before it is mounted on the laser welding jig 1 according to another example embodiment of the present disclosure. FIG. 16 is a drawing illustrating the appearance of the battery cell assembly 100 after it is mounted on the laser welding jig 1 according to another example embodiment of the present disclosure.

Referring to FIG. 15, the laser welding method may further include moving the connecting part 17 in the direction in which the connecting part 17 extends from the plate part 13. In other words, before mounting the battery cell assembly 100 on the laser welding jig 1, the laser welding method may further include moving the connecting part 17 so that it is vertically spaced from one surface of the battery cell assembly 100 equipped with the side frame 120.

Referring to FIG. 16, the laser welding method may further include moving the connecting part 17 in the direction opposite to the direction in which the connecting part 17 extends from the plate part 13. In other words, after mounting the battery cell assembly 100 on the laser welding jig 1, the laser welding method may further include moving the connecting part 17 so that it approaches vertically one surface of the battery cell assembly 100 equipped with the side frame 120.

As described above, even though the present disclosure is described focusing on preferred example embodiments with reference to the attached drawings, it is apparent that those skilled in the art will recognize that many obvious variations can be made from this description without departing from the scope of the present disclosure. Therefore, the scope of the present disclosure should be interpreted by the claims, which are written to include examples of many of these variations.

## Claims

1. A laser welding jig applied to a battery cell assembly that includes stacked plurality of battery cells and a side frame covering at least some of the plurality of battery cells, and in which adjacent two leads are bent and welded, the laser welding jig comprising:
a pallet configured on which the battery cell assembly is mounted; and
a protective jig disposed between the two adjacent two leads.

2. The laser welding jig of claim 1,
wherein the protective jig
is positioned back of the two adjacent leads.

3. The laser welding jig of claim 1,
wherein the protective jig
comprises carbon steel.

4. The laser welding jig of claim 1,
wherein the protective jig
comprises one end that is connected to the pallet to form a fixed end, and the other end that forms a free end.

5. The laser welding jig of claim 1, wherein the pallet comprises:
a plate part to which the battery cell assembly is mounted;
a pressing part configured to press the battery cell assembly mounted on the plate part; and
a connecting part that extends from the plate part and to which the protective jig is connected.

6. The laser welding jig of claim 5,
wherein the connecting part
is configured to be spaced apart from or accessible to one surface of the battery cell assembly in which the side frame is provided in a vertical direction.

7. The laser welding jig of claim 5,
further comprising an insulating block connecting the connecting part and the protective jig.

8. The laser welding jig of claim 7,
wherein the insulating block
comprises a slidingly joining part that is configured in order for the protective jig to move in a direction parallel to a stacking direction of the plurality of battery cells.

9. The laser welding jig of claim 6,
wherein the plate part
further comprises a fixing part configured to fix the side frame of the battery cell assembly.

10. A laser welding system further comprising:
the laser welding jig of claim 1; and
a moving part configured to move the battery cell assembly.

11. The laser welding system of claim 10,
wherein the pallet
comprises a moving part receiving part in which at least some of the battery cell assembly is not mounted in order for the moving part to be received.

12. A laser welding method of joining leads of a plurality of battery cells using the laser welding jig according to claim 1, the laser welding method comprises:
mounting a battery cell assembly to the laser welding jig;
bending the leads of the plurality of battery cells; and
welding the bent leads.

13. The welding method of claim 12,
wherein mounting the battery cell assembly to the laser welding jig comprises
the battery cell assembly being mounted by a moving part configured to move the battery cell assembly.

14. The welding method of claim 12,
wherein mounting the battery cell assembly to the laser welding jig comprises
the battery cell assembly being fixed by a fixing part provided by the laser welding jig.

15. The welding method of claim 12,
wherein the side frame comprises:
a protective jig storage part that receives the protective jig;
a first supporting part that is provided at one side of the protective jig storage part and configured to support a lead of the battery cell; and
a second supporting part that is provided at the other side of the protective jig storage part and configured to support a lead of the battery cell.

16. The welding method of claim 15,
wherein bending the leads of the plurality of battery cells comprises the bent leads are bent in order to comprise a first area supported by the first supporting part and a second area supported by the second supporting part.

17. The welding method of claim 12,
wherein the pallet of the laser welding jig comprises:
a plate part to which the battery cell assembly is mounted;
a pressing part configured to press the battery cell assembly mounted to the plate part; and
a connecting part that extends from the plate part and to which the protective jig is connected, and
wherein the connecting part
is configured to be spaced apart from or accessible to one surface of the battery cell assembly in which the side frame is provided in a vertical direction.

18. The welding method of claim 17,
wherein the welding method further comprises,
before mounting the battery cell assembly to the laser welding jig,
moving the connecting part to be spaced apart from one surface of the battery cell assembly in which the side frame is provided in the vertical direction.

19. The welding method of claim 18,
wherein the welding method further comprises,
after mounting the battery cell assembly to the laser welding jig,
moving the connecting part to be accessible to one surface of the battery cell assembly in which the side frame is provided in the vertical direction.

20. The welding method of claim 12,
wherein the welding method further comprises,
after welding the bent leads,
de-mounting the battery cell assembly by a moving part configured to move the battery cell assembly.
